# EUROPÄISCHE PATENTSCHRIFT

(11) **EP 2 423 134 B1**
(45) Veröffentlichungstag und Bekanntmachung des Hinweises auf die Patenterteilung: **13.03.2013**
(21) Anmeldenummer: 10174060.3
(22) Anmeldetag: 25.08.2010
(51) Int. Cl.: B65G 47/244, B65G 47/91

(54) **Vorrichtung zur Handhabung von plattenförmigen Werkstücken**
Device for handling slab-like workpieces
Dispositif de manipulation de pièces usinées en forme de plaques

(43) Veröffentlichungstag der Anmeldung: 29.02.2012
(73) Patentinhaber: Grundner Sondermaschinen GmbH, 4550 Kremsmünster (AT)
(72) Erfinder: Grundner, Johann, 4621 Sipbachzell (AT)
(74) Vertreter: Staudt, Armin Walter

(56) Entgegenhaltungen:
- EP-A1- 0 765 828
- US-A- 3 790 001
- US-A- 4 042 126

## Beschreibung

Die vorliegende Erfindung betrifft eine Vorrichtung zur Handhabung von plattenförmigen Werkstücken, um diese Werkstücke entweder von einem Plattenstapel aufzunehmen und einer Fördereinrichtung für Plattenbearbeitungsmaschinen zuzuführen oder von einer Fördereinrichtung nach einer Plattenbearbeitungsmaschine abzunehmen, seitlich zu versetzen und einer zweiten Fördereinrichtung, beispielsweise eine Rückfördereinrichtung zuzuführen.

Solche Vorrichtungen bestehen üblicherweise aus einem Führungsportal an dem ein Greifer montiert ist, der die Werkstücke aufnimmt und seitlich versetzt, wobei manche dieser bekannten Vorrichtungen gleichzeitig mit der seitlichen Versetzung auch die Werkstück um 90° drehen. Diese Vorrichtungen arbeiten mit Plattenbearbeitungseinrichtungen, beispielsweise Kantenfräser oder Kantenumleimmaschine zusammen und bilden bei moderneren teil- oder vollautomatisierten Bearbeitungseinrichtungen eine bauliche Einheit.

Weiterhin betrifft die Erfindung ein Verfahren zur Handhabung von plattenförmigen Werkstücken unter Verwendung einer derartigen Vorrichtung.

### Stand der Technik

Teil- oder vollautomatisierte Bearbeitungseinrichtungen zum Bearbeiten von plattenförmigen Werkstoffen sind seit vielen Jahren bekannt. So wird in DE 86 20 374 U1 eine einseitige Durchlaufbearbeitungsmaschine für plattenförmige Werkstoffe beschrieben, mit in Durchlaufrichtung hintereinander angeordneten Bearbeitungsaggregaten und einer auslaufseitig anschließenden Rückführeinrichtung, wobei die Rückführeinrichtung einen Aufnahmetisch, einen daneben angeordneten und parallel zur Bearbeitungseinrichtung verlaufenden Rückförderer und einen Querförderer umfasst. Um raumsparend arbeiten zu können, befindet sich der Rückförderer hier unterhalb der Bearbeitungsebene. Der Platzbedarf für die Manipulation der plattenförmigen Werkstücke, die Stückleistung der gesamten Einrichtung und der dafür erforderliche technische Aufwand sind die bestimmenden Kriterien, welche die Entwicklungen der folgenden Jahre bestimmten.

Die DE 298 07 071 U1 beschreibt einen mehrachsigen Manipulator mit zwei Wechselspanntischen, an denen die Aufspannung der Plattenrohlinge und deren Bearbeitung abwechselnd erfolgen. Hiermit kann zwar die Stückleistung gesteigert werden, allerdings sind der technische Aufwand und der Platzbedarf sehr hoch und die Anlage ist nicht wartungsfreundlich.

In der DE 10 2005 020 119 A1 wird ein Fertigungssystem für plattenförmige Werkstoffe beschrieben, bei dem durch teilweise Verschmelzung des Bearbeitungszentrums mit der Beschickungsvorrichtung eine vereinfachte Konstruktion sowie ein verminderter Platzbedarf erzielt werden. Die Greifeinrichtung umfasst eine Mehrzahl von Greifelementen, von denen mindestens eines verschwenkbar ist und ein zügiges und präzises Anlegen des plattenförmigen Werkstückes an eine im Bearbeitungszentrum angeordnete Anschlaganordnung ermöglicht.

Die Greifelemente sind hier Vakuumsauger. Ein besonders ausgestaltetes Greifelement, das mit einer Feder und einem Anschlagschalter ausgestattet ist, kann über ein Gelenk verschwenkt werden, um die plattenförmigen Werkstücke beim Ablegen ausrichten zu können. Dabei wird die Greifeinrichtung über den Stapel unbearbeiteter Werkstücke in Y- und in Z-Richtung mittels eines Motors verfahren und greift die Oberseite des obersten plattenförmigen Werkstücks. Dann wird die Greifeinrichtung entlang einer Führungsschiene verfahren, bis das Werkstück oberhalb des Werkstücktisches nahe der gewünschten Bearbeitungsposition zu liegen kommt. Dann wird das Werkstück so auf dem Werkstücktisch abgelegt, dass es nur noch mit dem schwenkbaren Greifelement in Verbindung steht. Nun wird das Werkstück an die Anschlagbolzen des Werkstücktisches herangeschoben, wobei das Greifelement entgegen der Kraft der Gelenkfeder verschwenkt wird, bis ein Anschlagschalter betätigt wird, der den Verschiebevorgang beendet.

Nachteilig bei dieser Ausführung ist, dass sie wenig flexibel ist und keine Herstellung von plattenförmigen Werkstücken mit unterschiedlicher Ausgestaltung ermöglicht. Um hier Abhilfe zu schaffen, wird in der DE 10 2006 002 403 A1 ein System vorgestellt, bei dem der Produktionsprozess vollständig elektronisch geplant und gesteuert wird. Damit soll der Verfahrensablauf optimiert werden. Das hier maschinenintegrierte Handlingsystem erweitert erheblich die Funktionalität eines derartigen Bearbeitungszentrums und die Bedienungsperson wird von einer Vielzahl von Rüst- und Werkstückhandhabungsaufgaben entlastet. Zudem weist dieses System einen geringeren Platzbedarf auf. Die Bearbeitungseinheit und die Greifeinrichtung sind hier an einem waagrecht verlaufenden und quer zu seiner Erstreckungsrichtung horizontal hin und her fahrbaren Führungsbalken gelagert. Auch hier ist die Greifeinrichtung mit Saughebern ausgestattet, die eine sehr schonende Handhabung auch bei empfindlichen Oberflächen ermöglicht. Nachteilig ist hier jedoch, dass die gesamte Bearbeitungseinrichtung eine erhebliche Erstreckung in Längsrichtung aufweist.

Dieser Nachteil wird bei einer Vorrichtung nach DE 20 2010 000 935 U1 etwas verbessert, indem die Bearbeitungseinrichtungen orthogonal zur Erstreckungsrichtung von zwei Bearbeitungstischen ausgerichtet ist. Die Bearbeitungstische sind in ihrer Erstreckungsrichtung verschiebbar und zugleich quer zu ihrer Erstreckungsrichtung verschiebbar. Eine Handlingeinrichtung verläuft parallel zum ersten Bearbeitungstisch und umfasst einen Hubtisch und Mittel zum Positionieren und Ausrichten des Werkstücks, welcher als Querschieber mit einer Schieberichtung quer zur Erstreckungsrichtung der Bearbeitungstische ausgebildet ist. Nachteilig bei dieser Ausführung ist die geringe Flexibilität der Handlingeinrichtung.

Die EP 0 765 828 A1 offenbart eine Vorrichtung zur Handhabung und ein Verfahren zur Handhabung von plattenförmigen Stücken gemäß dem Oberbegriff des Anspruche 1 und 9.

### Technische Aufgabenstellung

Der Erfindung liegt daher die Aufgabe zugrunde eine Vorrichtung und ein Verfahren zur Handhabung von plattenförmigen Werkstücken zu schaffen, wobei die Vorrichtung dafür geschaffen ist, mit Fördereinrichtungen von Einrichtungen zum Bearbeiten von plattenförmigen Werkstücken zusammen zu arbeiten und das Ziel verfolgt, für die gesamte Bearbeitungsstation bei geringem Gesamtplatzbedarf eine größtmögliche Flexibilität zu bewirken. Auch soll die Vorrichtung geeignet sein die Herstellung von plattenförmigen Werkstücken mit unterschiedlicher Ausgestaltung zu ermöglichen und auch bei geringen Stückzahlen eine hohe Effizienz in der Bearbeitung zu gewährleisten. Weiters soll die Vorrichtung so ausgestaltet sein, dass sie auch die Handhabung von Werkstücken mit empfindlichen Oberflächen gestattet.

Diese Aufgabe wird gelöst durch eine Vorrichtung zur Handhabung von plattenförmigen Werkstücken mit den Merkmalen des unabhängigen Anspruchs 1. Vorteilhafte Ausgestaltungen der Vorrichtung sind Gegenstand der abhängigen Ansprüche.

Hinsichtlich des Verfahrens wird diese Aufgabe ausgehend von einem Verfahren der eingangs genanten Gattung erfindungsgemäß dadurch gelöst, dass mehrere plattenförmige Werkstücke mittels des mit Vakuumsaugknöpfen versehenen Schwenkarms aufgenommen und seitlich um einen vorbestimmten Weg versetzt, wieder abgelegt werden.

Vorteilhafte Ausgestaltungen des Verfahrens sind Gegenstand der abhängigen Verfahrensansprüche.

### Ausführungsbeispiel

Die erfindungsgemäße Vorrichtung zur Handhabung von Plattenförmigen Werkstücken und ihre Funktionsweise wird nachstehend anhand der Figuren näher erläutert. Darin zeigen:
**Fig. 1** eine schematische Draufsicht auf eine Bearbeitungseinrichtung für plattenförmige Werkstücke mit einer ersten Fördereinrichtung, die erfindungsgemäße Vorrichtung während der Aufnahme eines plattenförmigen Werkstücks und einer zweiten Fördereinrichtung zur Rückführung des plattenförmigen Werkstücks;
**Fig. 2** die schematische Draufsicht gemäß Fig. 1, wobei hier die erfindungsgemäße Vorrichtung während der Ablage des um 90° gedrehten plattenförmigen Werkstücks auf die zweite Fördereinrichtung dargestellt ist;
**Fig. 3** die schematische Draufsicht auf die erfindungsgemäße Vorrichtung in ihrer Ausgangsposition während der Aufnahme eines plattenförmigen Werkstücks gemäß Fig. 1;
**Fig. 4** die schematische Draufsicht auf die erfindungsgemäße Vorrichtung in ihrer Endposition während der Ablage eines plattenförmigen Werkstücks gemäß Fig. 2;
**Fig. 5** die schematische Draufsicht auf die erfindungsgemäße Vorrichtung in ihrer Endposition während der Ablage eines verschwenkten aber nicht gedrehten plattenförmigen Werkstücks.

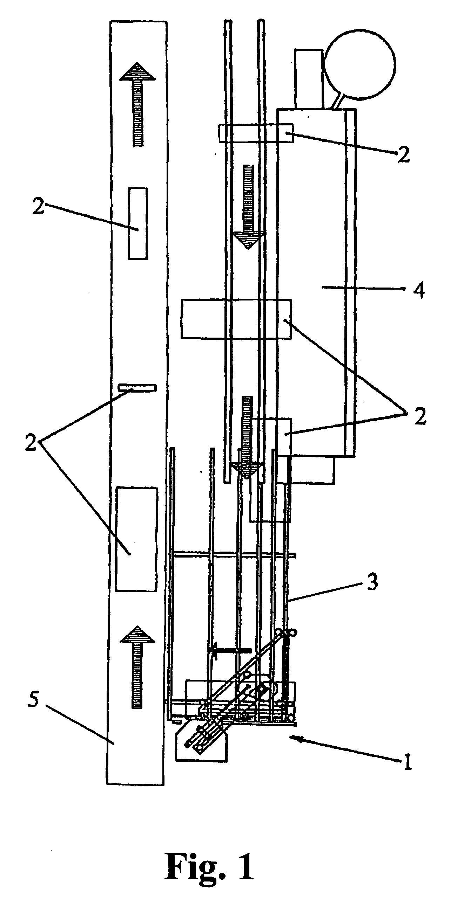

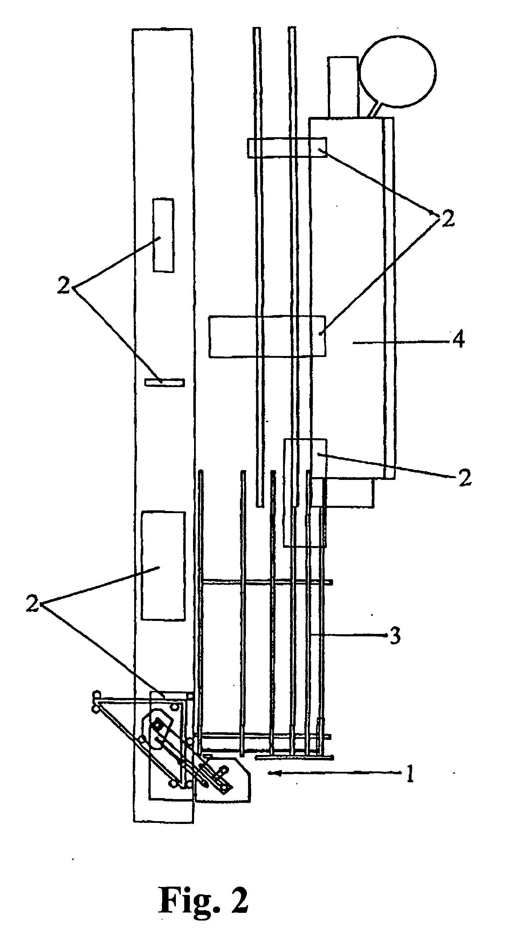

Die erfindungsgemäße Vorrichtung 1 zur Handhabung von plattenförmigen Werkstücken 2 wird beispielsweise eingesetzt zur Abnahme eines plattenförmigen Werkstücks 2 von einer ersten Fördereinrichtung 3 nach einer ersten Bearbeitungseinrichtung 4 und zur Ablage des Werkstücks 2 auf einer zweiten Fördereinrichtung 5, die ein Rückförderer zur selben Bearbeitungseinrichtung 4 sein kann oder zu einer weiteren Bearbeitungseinrichtung führt. Die Vorrichtung 1 nimmt die Werkstück 2 auf, versetzt sie um einen konstanten Weg und legt sie ungedreht, wie in Fig. 1 dargestellt, oder um 90° gedreht, wie in Fig. 2 dargestellt, wieder ab. Der Vorteil der Erfindung gegenüber dem bekannten Stand der Technik liegt darin, dass längliche Werkstücke dabei immer in die günstigste Lage ausgerichtet werden können um Platz für deren Transport zu sparen und im geringen Platzbedarf für die Vorrichtung 1 selbst, die ohne Führungsportal oder Führungsbalken arbeitet und damit eine geringe Bauhöhe hat. Ein weiterer Vorteil besteht in der hohen Flexibilität bezüglich der Ausrichtung von unterschiedlich großen, unmittelbar aufeinander folgenden Werkstücken 2, wobei von der Vorrichtung 1 immer die optimale Ausrichtung zum Weitertransport gewählt wird.

Die Vorrichtung 1 zur Handhabung von plattenförmigen Werkstücken 2 ist als getrennte Baueinheit ausgeführt und wird in unmittelbarer Nachbarschaft zu einer Plattenbearbeitungseinrichtung 4 angeordnet. Sie nimmt das Werkstück 2 beispielsweise von einer ersten Fördereinrichtung 3 aus einer Bearbeitungseinrichtung 4 auf, versetzt es seitlich um einen konstanten Weg und legt es auf einer zweiten Fördereinrichtung 5 ab, wobei das Werkstück 2 dabei um 0° oder um 90° gedreht wird.

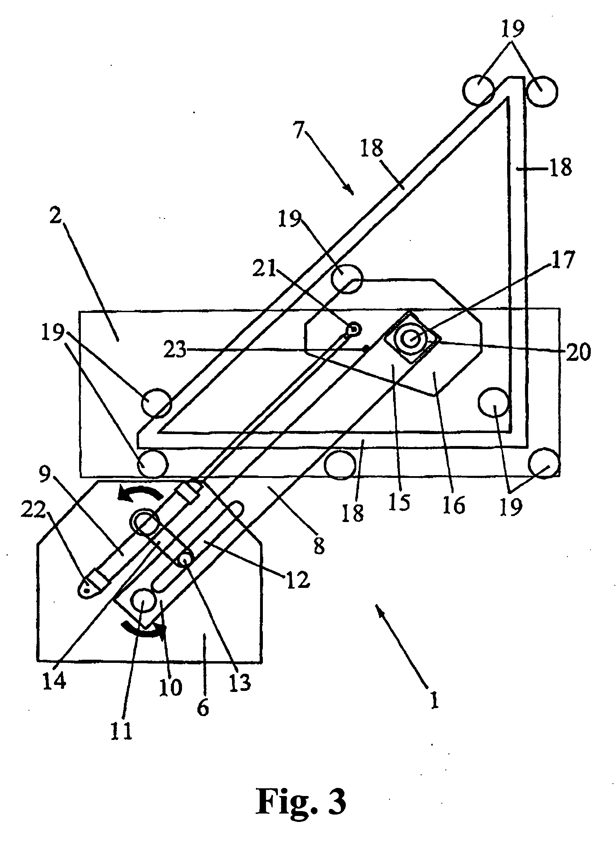

Die erfindungsgemäße Vorrichtung besteht, wie aus Fig. 3 hervor geht, aus nur einem Standfuß 6, einer Greifeinrichtung 7, einem Schwenkarm 8 und einem Hubzylinder 9.

Der Schwenkarm 8 ist mit einem Ende 10 in einem Lager 11 drehbar mit dem Standfuß 6 verbunden und weist eine Führungskulisse 12 für eine Kurvenrolle 13 auf, wobei die Kurvenrolle 13 über einen Kurbeltrieb 14, der drehbar mit dem Standfuß 6 verbunden ist, in der Kulisse 12 verschoben wird. Am anderen Ende 15 des Schwenkarms 8 ist die Greifeinrichtung 7 drehbar angeordnet. Die Greifeinrichtung 7 besteht aus einer Greifplatte 16, einem Hebe- und Absenkzylinder 17 für die Greifplatte 16, einem mit der Greifplatte 16 verbundenen Gestänge 18 mit Vakuumsaugfüßen 19, einem Drehgelenk 20 und einer drehbar gelagerten Fixierung 21 für den Endpunkt des Hubzylinders 9, der mit seinem Zylinderfuß 22 drehbar am Standfuß 6 fixiert ist, sowie einem Anschlag 23, der die maximale Drehposition der Greifeinrichtung 7 festlegt.

Der Hubzylinder 9 und der Schwenkarm 8 sind während der Schwenkbewegung stets parallel zueinander ausgerichtet. Bei der Schwenkbewegung wird das Werkstück 2 während der seitlichen Versetzung nicht gedreht oder um 90° gedreht.

In seiner Ausgangsposition nach Fig. 3 befindet sich die Vorrichtung 1 beispielsweise über einer ersten Fördereinrichtung 3, welche die plattenförmigen Werkstücke 2 beispielsweise nach ihrem Durchtritt durch eine Plattenbearbeitungseinrichtung 4, wie einer Kantenanleimmaschine, aufnimmt. Genauso ist es aber auch denkbar, die Vorrichtung 1 dafür einzusetzen, die plattenförmigen Werkstücke 2 aus einem Plattenvorrat aufzunehmen und einer Fördereinrichtung einer Bearbeitungseinrichtung zuzuführen.

Die Greifeinrichtung 7 wird mittels des Hebe- und Absenkzylinders 17 um einen vorbestimmten Weg auf das Werkstück 2 abgesenkt, bis ein maximaler Auflagedruck erreicht ist und Vakuum an die Vakuumsaugfüße 19 angelegt. In dieser Position ist der Hubzylinder 9 ausgefahren und der Anschlag 23 gegen den Schwenkarm 8 gedrückt. Dann wird die Greifeinrichtung 7 wieder mittels des Hebe- und Absenkzylinders 17 um eine vorbestimmte Höhe angehoben, wobei das an den Vakuumsaugfüßen 19 hängende Werkstück 2 von der ersten Fördereinrichtung 3 oder dem Plattenvorrat abgehoben wird.

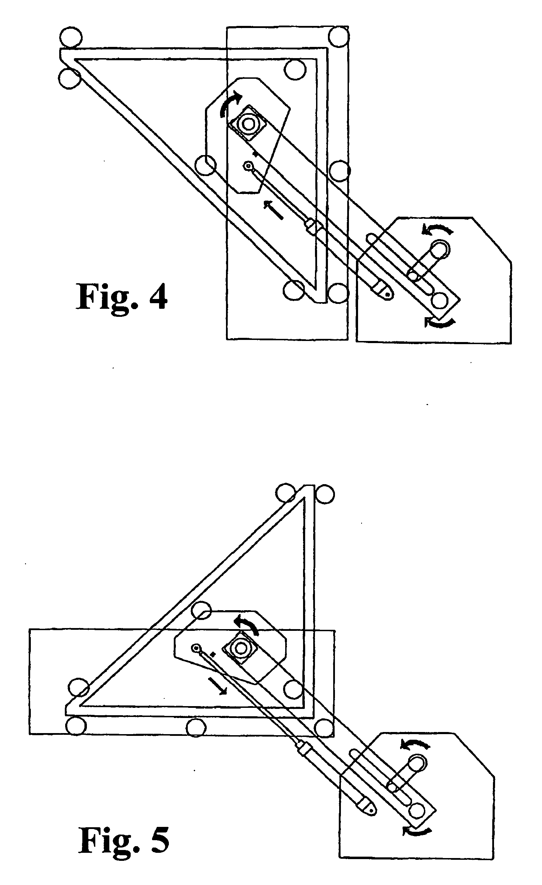

Nun wird der Kurbeltrieb 14 in Bewegung gesetzt, wie in Fig. 3 durch den oberen Pfeil angedeutet. Dadurch verfährt die Kurvenrolle 13 in der Kulisse 12 und versetzt den Schwenkarm 8 seitlich in eine Schwenkbewegung. Während dieser Schwenkbewegung kann der Hubzylinder 9 eingefahren werden, wodurch sich die Greifeinrichtung 7 in Drehung versetzt und das Werkstück 2 um 90° dreht, wobei der Anschlag 23 weiterhin am Schwenkarm 8 anliegt, wie in Fig. 4 dargestellt. Bleibt der Hubzylinder 9 jedoch ausgefahren, wie in Fig. 5 gezeigt, verlagert sich der Anschlag 23 bis er am Hubzylinder 9 anliegt. Die Greifeinrichtung 7 und mit ihr das Werkstück 2 wird nicht gedreht. Ist die Absetzposition erreicht, wird die Greifeinrichtung 7 wieder über den Hebe- und Absenkzylinder 17 abgesenkt, bis ein maximaler Auflagedruck erreicht ist und die Vakuumverbindung zu den Vakuumsaugköpfen 19 unterbrochen, womit sich das Werkstück 2 von der Greifeinrichtung 7 löst.

Um wieder in die Ausgangsposition zu gelangen, wird die Greifeinrichtung 7 wieder angehoben und der Kurbeltrieb 14 dreht sich in Richtung des Pfeils weiter. Dabei kommt die Kurvenrolle 13 nun mit geringerem Abstand wieder am Lager 11 des Schwenkarmes 8 vorbei und führt damit eine schnellere Schwenkbewegung aus. Bei dieser Bewegung bleibt der Hubzylinder 9 ausgefahren oder wird ausgefahren bis der Anschlag 23 wieder am Schwenkarm 8 zu liegen kommt um die Abholposition wieder zu erreichen.

Durch die Bewegungsrichtung des Kurbeltriebs 14 während der Schwenkbewegung der Greifeinrichtung 7 mit dem angesaugten Werkstück 2 zum Absetzpunkt des Werkstücks 2 bewegt sich der Schwenkarm 8 langsamer, da die Kurvenrolle 13 einen größeren Abstand zum Lager 11 des Schwenkarmes 8 hat.

## Patentansprüche

1. Vorrichtung zur Handhabung von plattenförmigen Werkstücken (2), mit einer Greifeinrichtung, die mit Vakuumsaugknöpfen (19) zur Halterung der Werkstücke (2) ausgestattet ist und mittels der die Werkstücke (2) aufgenommen, und seitlich versetzt wieder abgesetzt werden, die Greifeinrichtung (7) an einem Schwenkarm (8) drehbar gelagert ist, und dieser über ein Lager (11) an einem einzigen Standfuß (6) drehbar gelagert und zur Ausführung einer Schwenkbewegung ausgebildet ist, und dass ein Hubzylinder (9) vorgesehen ist, der am Standfuß (6) mit seinem Zylinderfuß (22) drehbar gelagert ist **dadurch gekennzeichnet, dass** der Hubzylinder, mit der Greifeinrichtung (7) über eine Fixierung (21) in Wirkverbindung steht, und dass zur Ausführung der Schwenkbewegung des Schwenkarms (8) ein Kurbeltrieb (14) und eine Kurvenrolle (13), die in einer Kulisse (12) geführt ist, vorgesehen sind.

2. Vorrichtung nach Anspruch 1, **dadurch gekennzeichnet, dass** die Kulisse (12) zur Führung der Kurvenrolle (13) im Schwenkarm (8) angeordnet ist.

3. Vorrichtung nach Anspruch 1 oder 2, **dadurch gekennzeichnet, dass** der Kur beltrieb (14) nur in einer Richtung angetrieben ist.

4. Vorrichtung nach Anspruch 1, 2 oder 3, **dadurch gekennzeichnet, dass** die Kulisse so ausgebildet ist, dass die Kurvenrolle (13) während der seitlichen Versetzung des Werkstücks (2) in der Kulisse (12) den vom Lager (11) des Schwenkarms (8) am Standfuß (6) am weitest entfernten Punkt in der Kulisse (12) erreicht und bei der Rückführung des Schwenkarms (8) in die Ausgangsposition die Kurvenrolle (13) in der Kulisse (12) den zum Lager (11) des Schwenkarms (8) nächst liegenden Punkt erreicht.

5. Vorrichtung nach einem der Ansprüche 1 bis 4, **dadurch gekennzeichnet, dass** die Greifeinrichtung (7) aus einer Greifplatte (16), einem mit der Greifplatte (16) drehfest verbundenen Gestänge (18), mehreren am Gestänge (18) angeordneten Saugknöpfen (19), einer Hebe- und Absenkeinrichtung (17) für die Greifplatte (16) und einem auf der Greifplatte (16) fixierten Anschlag (23) besteht.

6. Vorrichtung nach einem der Ansprüche 1 bis 5, **dadurch gekennzeichnet, dass** der Anschlag (23) den maximalen Drehwinkel der Greifeinrichtung (7) durch Anschlag am Schwenkarm (8) oder durch Anschlag am Hubzylinder (9) begrenzt.

7. Vorrichtung nach einem der Ansprüche 1 bis 6, **dadurch gekennzeichnet, dass** der Schwenkarm (8) und der Hubzylinder (9) während der Schwenkbewegung stets zueinander parallel ausgerichtet sind.

8. Vorrichtung nach einem der Ansprüche 1 bis 7, **dadurch gekennzeichnet, dass** die Drehung der Greifeinrichtung (7) durch Ausfahren oder Einziehen des Hubzylinders (9) erfolgt.

9. Verfahren zur Handhabung von plattenförmigen Werkstücken (2) unter Verwendung einer Vorrichtung nach einem der Ansprüche 1 bis 8, **dadurch gekennzeichnet, dass** mehrere plattenförmige Werkstücke (2) mittels des mit Vakuumsaugknöpfen versehenen Schwenkarms aufgenommen und seitlich um einen vorbestimmten Weg versetzt, wieder abgelegt werden.

10. Verfahren nach Anspruch 9, **dadurch gekennzeichnet, dass** die Werkstücke von einer ersten Fördereinrichtung (3) aufgenommen und gleichförmig ausgerichtet oder um 90° gedreht werden und seitlich versetzt auf einer zweiten Fördereinrichtung (5) abgelegt werden.

11. Verfahren nach Anspruch 9, **dadurch gekennzeichnet, dass** sowohl das seitliche Versetzen als auch das Drehen der plattenförmigen Werkstücke (2) ruckfrei erfolgen.

## Claims

1. A device for handling plate-shaped workpieces (2), having a gripper unit, which is equipped with vacuum suction cups (19) for holding the workpieces (2), and by means of which the workpieces (2) can be received and put down again laterally offset, the gripper unit (7) being mounted so it is rotatable on a pivot arm (8), and this pivot arm being mounted so it is rotatable on a single stand base (6) via a bearing (11) and being implemented to execute a pivot movement, and a lift cylinder (9) is provided, which is mounted so it is rotatable using its cylinder base (22) on the stand base (6), **characterized in that** the lift cylinder has an operational link to the gripper unit (7) via a fixation (21), and a crank drive (14) and a cam roller (13), which is guided in a link (12), are provided to execute the pivot movement of the pivot arm (8).

2. The device according to Claim 1, **characterized in that** the link (12) for guiding the cam roller (13) is arranged in the pivot arm (8).

3. The device according to Claim 1 or 2, **characterized in that** the crank drive (14) is only driven in one direction.

4. The device according to Claim 1, 2, or 3, **characterized in that** the link is implemented so that the cam roller (13), during the lateral offsetting of the workpiece (2) in the link (12), reaches the point in the link (12) farthest away from the bearing (11) of the pivot arm (8) on the stand base (6) and, during the return of the pivot arm (8) into the starting position, the cam roller (13) in the link (12) reaches the point closest to the bearing (11) of the pivot arm (8).

5. The device according to one of Claims 1 to 4, **characterized in that** the gripper unit (7) consists of a gripper plate (16), a linkage (18), which is connected in a rotationally fixed manner to the gripper plate (16), multiple suction cups (19) arranged on the linkage (18), a raising and lowering unit (17) for the gripper plate (16), and a stop (23) fixed on the gripper plate (16).

6. The device according to one of Claims 1 to 5, **characterized in that** the stop (23) delimits the maximum rotational angle of the gripper unit (7) by stopping on the pivot arm (8) or by stopping on the lift cylinder (9).

7. The device according to one of Claims 1 to 6, **characterized in that** the pivot arm (8) and the lift cylinder (9) are always aligned parallel to one another during the pivot movement.

8. The device according to one of Claims 1 to 7, **characterized in that** the rotation of the gripper unit (7) is performed by extending or retracting the lift cylinder (9).

9. A method for handling plate-shaped workpieces (2) employing a device according to one of Claims 1 to 8, **characterized in that** multiple plate-shaped workpieces (2) are received by means of the pivot arm, which is provided with vacuum suction cups, and are put down again, offset laterally by a predetermined distance.

10. The method according to Claim 9, **characterized in that** the workpieces are received by a first conveyor unit (3) and are uniformly aligned or are rotated by 90° and are put down on a second conveyor unit (5) laterally offset.

11. The method according to Claim 9, **characterized in that** both the lateral offsetting and also the rotation of the plate-shaped workpieces (2) are performed smoothly.

## Revendications

1. Dispositif pour la manipulation de pièces d'oeuvre en forme de plaques (2) avec un dispositif de préhension équipé de ventouses sous vide (19) pour le maintien des pièces (2), au moyen duquel les pièces (2) sont ramassées et reposées après un déplacement latéral, dans lequel le dispositif de préhension (7) est supporté avec possibilité de rotation sur un bras pivotant (8) et ce dernier est supporté avec possibilité de rotation par l'intermédiaire d'un palier (11) sur un pied d'appui (6) et conçu pour exécuter un mouvement pivotant, et dans lequel il est prévu un cylindre de levage (9) qui est supporté avec possibilité de rotation sur le pied d'appui (6) par son pied de cylindre (22), **caractérisé en ce que** le cylindre de levage est en liaison active avec le dispositif de préhension (7) par l'intermédiaire d'une fixation (21) et **en ce qu'**il est prévu pour l'exécution du mouvement pivotant du bras pivotant (8) une transmission à manivelle (14) et un galet à manivelle (13) guidé dans une glissière (12).

2. Dispositif selon la revendication 1, **caractérisé en ce que** la glissière (12) est disposée dans le bras pivotant (8) pour guider le galet à manivelle (13).

3. Dispositif selon la revendication 1 ou 2, **caractérisé en ce que** la transmission à manivelle (14) n'est entraînée que dans un sens.

4. Dispositif selon la revendication 1, 2 ou 3, **caractérisé en ce que** la glissière est conformée de telle sorte que le galet à manivelle (13) atteigne pendant le déplacement latéral de la pièce (2) dans la glissière (12) le point de la glissière (12) le plus éloigné du palier (11) du bras pivotant (8) sur le pied d'appui (6) et que lors du retour du bras pivotant (8) dans la position de départ, le galet à manivelle (13) atteigne dans la glissière (12) le point le plus proche du palier (11) du bras pivotant (8).

5. Dispositif selon l'une des revendications 1 à 4, **caractérisé en ce que** le dispositif de préhension (7) se compose d'une plaque de préhension (16), d'une tringle (18) reliée à la plaque de préhension (16) de manière solidaire en rotation, de plusieurs ventouses (19) disposées sur la tringle (18), d'un dispositif de levage et d'abaissement (17) pour la plaque de préhension (16) et d'une butée (23) fixée sur la plaque de préhension (16).

6. Dispositif selon l'une des revendications 1 à 5, **caractérisé en ce que** la butée (23) limite l'angle de rotation maximal du dispositif de préhension (7) en butant sur le bras pivotant (8) ou en butant sur le cylindre de levage (9).

7. Dispositif selon l'une des revendications 1 à 6, **caractérisé en ce que** le bras pivotant (8) et le cylindre de levage (9) sont toujours orientés parallèlement l'un à l'autre pendant le mouvement pivotant.

8. Dispositif selon l'une des revendications 1 à 7, **caractérisé en ce que** la rotation du dispositif de préhension (7) est exécutée par le déploiement ou la rétraction du cylindre de levage (9).

9. Procédé pour la manipulation de pièces d'oeuvre en forme de plaques (2) utilisant un dispositif selon l'une des revendications 1 à 8, **caractérisé en ce que** plusieurs pièces (2) en formes de plaques sont ramassées au moyen du bras pivotant muni de ventouses et reposées après un déplacement latéral prédéterminé.

10. Procédé selon la revendication 9, **caractérisé en ce que** les pièces sont prises sur un premier dispositif de transport (3) pour être posées sur un deuxième dispositif de transport (5) en étant orientées de la même manière ou tournées de 90° et déplacées latéralement.

11. Procédé selon la revendication 9, **caractérisé en ce que** le déplacement latéral et la rotation des pièces en forme de plaques (2) s'effectuent sans secousses.
